# EUROPÄISCHE PATENTSCHRIFT

(11) **EP 1 189 789 B1**
(45) Veröffentlichungstag und Bekanntmachung des Hinweises auf die Patenterteilung: **27.08.2003**
(21) Anmeldenummer: 00945652.6
(22) Anmeldetag: 23.06.2000
(51) Int. Cl.: B60R 25/00, E05B 49/00

(54) **SCHLIESSSYTEM, INSBESONDERE FÜR EIN KRAFTFAHRZEUG**
LOCKING SYSTEM, ESPECIALLY FOR A MOTOR VEHICLE
SYSTEME DE VERROUILLAGE DESTINE NOTAMMENT A UN VEHICULE AUTOMOBILE

(30) Priorität: 25.06.1999 DE 19929017
(43) Veröffentlichungstag der Anmeldung: 27.03.2002
(73) Patentinhaber: Marquardt GmbH, 78604 Rietheim-Weilheim (DE)
(72) Erfinder: STEHLE, Wolfgang, D-78603 Renquishausen (DE); WEISSER, Dietmar, D-78604 Rietheim (DE); MATTES, Johannes, D-78567 Fridingen (DE); HIPP, Uwe, D-72514 Engelswies (DE)
(74) Vertreter: Patentanwälte Eisele, Otten & Roth
(86) Internationale Anmeldenummer: DE0002054
(87) Internationale Veröffentlichungsnummer: WO01000461

(56) Entgegenhaltungen:
- EP-A- 0 673 003
- WO-A-00/12848
- US-A- 5 293 160

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen im HF(Hochfrequenz)-Bereich arbeiten. Insbesondere bei Kraftfahrzeugen werden solche Schließsysteme als Türschließsysteme, Zündschloßsysteme, Lenkradverriegelungen o. dgl. verwendet.

Einschließsystem gemäß dem Oberbegriff von Anspruch 1 ist aus der EP 0 673 003 A1 bekannt. Weitere Schließsysteme sind aus der DE 43 40 260 A1 bekannt. Das Schließsystem besteht aus einer wenigstens zwei Zustände besitzenden Steuereinrichtung zur Ent- und/oder Verriegelung der Autotüren, des Zündschlosses, der Lenkradverriegelung o. dgl., und einem zugehörigen elektronischen Schlüssel. Die Steuereinrichtung und der Schlüssel besitzen zu deren bestimmungsgemäßen Betrieb Mittel zum Senden und/oder Empfangen von Signalen. Im bestimmungsgemäßen Betrieb ist zwischen dem Schlüssel und der Steuereinrichtung wenigstens ein Signal als codiertes Betriebssignal übertragbar, so daß nach positiver Auswertung des übertragenen Betriebssignals und damit bei berechtigtem Schlüssel eine Änderung des Zustandes der Steuereinrichtung bewirkbar ist.

Solche Schließsysteme sind auch mit sogenannter "Keyless Entry/Go"-Funktionalität weiterentwickelt, wobei eine manuelle Betätigung des elektronischen Schlüssels durch den Benutzer nicht mehr notwendig ist. Es genügt, daß der Benutzer den Schlüssel mit sich führt, wobei das Betriebssignal zwischen der Steuereinrichtung und dem Schlüssel selbsttätig übertragen wird, wenn der Benutzer sich in einem, in der Nähe und/oder im Inneren des Kraftfahrzeugs befindlichen Wirkbereich aufhält.

Es sind hier Fälle denkbar, in denen nichtberechtigte Benutzer abwarten bis der berechtigte Benutzer nach Verriegeln des Türschließsystems des Kraftfahrzeugs den eigentlichen Wirkbereich für das Schließsystem verlassen hat. Mit Hilfe einer transparenten Elektronik für den Schlüssel und/oder die Steuereinrichtung veranlassen die nichtberechtigten Benutzer ein Senden des Betriebssignals durch den Schlüssel des berechtigten Benutzers, wobei über die transparente Elektronik das Betriebssignal zum Kraftfahrzeug übertragen wird. Dadurch erfolgt ein Entriegeln des Türschließsystems, das der berechtigte Benutzer nicht mehr bemerkt, da er sich bereits in beträchtlicher Entfernung vom Kraftfahrzeug, außerhalb des Wirkbereichs für das Schließsystem befindet. Die nichtberechtigten Benutzer erhalten dadurch Zugang zum Kraftfahrzeug.

Um einen solchen Zugang von nichtberechtigten Benutzern zum Kraftfahrzeug zu verhindern, wird in der nicht vorveröffentlichten DE 199 41 428 A1, die auf die deutsche Patentanmeldung DE 198 40 040.3 des Anmelders zurückgeht, vorgeschlagen, anhand der Laufzeit des Betriebssignals festzustellen, ob das Betriebssignal aus dem Wirkbereich oder außerhalb des Wirkbereichs herrührt. Wie jedoch festgestellt wurde, können Toleranzen der im Schlüssel sowie in der Steuereinrichtung vorhandenen Bauteile zu einer Verfälschung der Laufzeitmessung führen. In diesem Fall kann ein von außerhalb des Wirkbereichs stammendes Betriebssignal fälschlicherweise für ein zulässiges Betriebssignal gehalten werden, was wiederum die Diebstahlsicherheit des Schließsystems beeinträchtigt.

Weiter ist auch aus der DE 44 09 167 C1 bzw. der EP 0 673 003 A1 bei einem Schließsystem bekannt, Mittel zur Bestimmung des Abstandes zwischen dem Schlüssel und dem die Steuereinrichtung beinhaltenden Kraftfahrzeug vorzusehen. Mit Hilfe dieser Mittel überprüft der Schlüssel, ob sich ein Kraftfahrzeug in der Nähe befindet, wobei lediglich bei Unterschreiten eines zulässigen Abstandes die Zustandsänderung der Steuereinrichtung bewirkt werden kann. Das Mittel zur Bestimmung des Abstandes kann mit Signalen arbeiten, die vom Kraftfahrzeug reflektiert werden. Alternativ können die Signale auch von der Steuereinrichtung empfangen, verstärkt und wieder zum Schlüssel zurückgesendet werden. Ebenso kann auch die Steuereinrichtung die Signale aussenden und der Schlüssel daraufhin ein Antwortsignal zurücksenden. Als- nachteilig bei diesem Schließsystem hat sich jedoch herausgestellt, daß ein zufällig in der Nähe befindliches weiteres Kraftfahrzeug oder auch Toleranzen zu Fehlern in der Abstandsmessung führen können. Dabei kann es vorkommen, daß fälschlicherweise aufgrund des weiteren Fahrzeuges oder von Toleranzen ein zulässiger Abstand erkannt wird, obwohl der Benutzer den Wirkbereich seines Fahrzeuges bereits verlassen hat. Damit mangelt es auch diesem Schließsystem an der erforderlichen Fehler- sowie Diebstahlsicherheit. Zudem verursachen die Mittel zur Bestimmung des Abstandes einen zusätzlichen Aufwand sowie erhöhte Kosten.

Schließlich ist aus der US 5 293 160 A ein Schließsystem für ein Kraftfahrzeug bekannt, bei dem eine von einem Benutzer tragbare Schlüsselkarte mit einer Steuereinrichtung im Kraftfahrzeug über Funksignale kommuniziert. Auch bei diesem Schließsystem kann der Abstand zwischen der Schlüsselkarte und dem Kraftfahrzeug mittels der Laufzeit einer Funkwelle gemessen werden. Dadurch wird die Position der Schlüsselkarte innerhalb eines vorbestimmten Bereichs bestimmt. Die Berechtigung zur Auslösung einer Aktion des Schließsystems wird dann überprüft, wenn die Schlüsselkarte im richtigen Bereich befindlich ist. Auch dieses bekannte Schließsystem weist die obengenannten Nachteile auf.

Der Erfindung liegt ausgehend von der EP 0 673 003 A1 die Aufgabe zugrunde, die Diebstahlsicherheit des Schließsystems noch weiter zu verbessern.

Diese Aufgabe wird bei einem gattungsgemäßen Schließsystem durch die kennzeichnenden Merkmale des Anspruchs 1 gelöst.

Die Erfindung geht von dem Gedanken aus, daß von einer der beiden Einrichtungen des Schließsystems, nämlich von der Steuereinrichtung im Fahrzeug und/oder vom Schlüssel, ein Reichweitensignal gesendet wird. Das Reichweitensignal wird nach Empfang in der anderen Einrichtung im wesentlichen zeitgleich von dieser wieder zurückgesandt. Hierzu ist die als Spiegel für das Reichweitensignal wirkende Rücksendeeinrichtung in der Art eines Transverters ausgebildet. In der einen Einrichtung wird dann das empfangene mit dem gesendeten Reichweitensignal mittels einer Vergleichseinrichtung zur Bestimmung des Abstandes der beiden Einrichtungen ausgewertet. Da keine Verarbeitung des Reichweitensignals in der anderen Einrichtung erfolgt, sondern die andere Einrichtung in der Art eines Spiegels wirkt, können sich Toleranzen in den Bauteilen des Schlüssels und/oder der Steuereinrichtung gar nicht erst auswirken. Dadurch ergibt sich die korrekte doppelte Laufzeit zwischen der Steuereinrichtung und dem Schlüssel bzw. die zurückgelegte Strecke des Reichweitensignals. Bei der Vergleichseinrichtung handelt es sich um einen Phasenvergleicher, in dem die Phasenlage des ausgesendeten Signals mit derjenigen des rückgesendeten Signals verglicher wird. Die Auswertung des Phasenversatzes, beispielsweise mittels eines Prozessors, einer Logik o. dgl., ergibt schließlich die doppelte Laufzeit und/oder die zurückgelegte Strecke des Reichweitensignals. Weitere Ausgestaltungen der Erfindung sind Gegenstand der Unteransprüche.

Zur Erhöhung der Meßgenauigkeit können mehrere Reichweitensignale von der einen Einrichtung ausgesendet werden, um so mehrere Einzelmessungen der Reichweite durchzuführen. Dabei können die einzelnen Reichweitensignale direkt hintereinander folgen, indem eine bestimmte Pulsfolge für die Reichweitensignale aneinandergereiht ist. Ebensogut können die einzelnen Reichweitensignale auch mit Abständen einander folgen, indem sonstige Signale, wie beispielsweise Teile des Betriebssignals in den Abständen übertragen werden. Zweckmäßigerweise wird anschließend der Mittelwert der Einzelmessungen zur Abstandsbestimmung berechnet, so dass Entfernungs-Meßfehler minimiert werden.

In einer weiteren Ausgestaltung können auch bestimmte Einzelmessungen aus den mehreren Einzelmessungen der Reichweite derart manipuliert werden, daß diese zur Bildung des Mittelwertes nicht herangezogen werden. Die Datenbasis, welche der Einzelmessungen auf diese Art und Weise manupuliert sind, sind für beide Einrichtungen gleich bzw. werden auf die gleiche Art und Weise in beiden Einrichtungen bestimmt und/oder berechnet. Durch diese Maßnahme wird die Manipulationssicherheit für die Abstandsbestimmung weiter erhöht.

Ebenfalls eine Optimierung im Hinblick auf die Manipulationssicherheit der Reichweitenmessung kann man weiterhin durch Einstreuen einer definierten Anzahl von Reichweitenbegrenzungsmessungen in das gesamte Datenprotokoll, das zwischen den beiden Einrichtungen als Signal übertragen wird, erzielen. Zweckmäßigerweise wird man eine beliebige bzw. ständige Veränderung der Lage dieser Messungen vornehmen, so daß die jeweilige Messung für einen Manipulator nicht vorhersehbar ist. Zur Kennzeichnung für die Vornahme einer Reichweitenmessung kann die das Reichweitensignal aussendende Einrichtung in einen dafür vorgesehenen Betriebsmodus umschalten, wobei das Umschalten der anderen Einrichtung innerhalb des Datenprotokolls für das übertragene Signal mitgeteilt wird. Schließlich führt eine Variation der Pulsfolge der Reichweitenmessung zu einer Ausschließung der Mehrdeutigkeit der Meßergebnisse.

Die elektrischen und/oder elektronischen Bauteile o. dgl. können Toleranzen aufweisen, die beispielsweise zu unterschiedlichen Verzögerungszeiten bei der Signalverarbeitung führen können. Solche Systemtoleranzen der beiden Einrichtungen lassen sich in einer Kalibrierung vor der eigentlichen Meßsequenz für die Abstandsbestimmung ermitteln. Anschließend können dann diese Systemtoleranzen bei der eigentlichen Messung entsprechend berücksichtigt werden, wobei sich deren Berücksichtigung in der Vergleichseinrichtung anbietet. Beispielsweise können die ermittelten Toleranzwerte von der durch die Bauteile und die Luftstrecke bewirkten Gesamtlaufzeit des Reichweitensignals dann subtrahiert werden.

Die mit der Erfindung erzielten Vorteile bestehen insbesondere darin, daß eine unberechtigte Betätigung des Schließsystems mit Sicherheit erkannt wird und sich daher auch wirksam verhindern läßt. Ebensogut wird ein wirksamer Schutz vor Manipulationen des Schließsystems, insbesondere vor Angriffen mittels einer transparenten Elektronik durch nichtberechtigte Personen, erreicht. Außerdem sind Fehlbedienungen des Schließsystems ausgeschlossen. Das erfindungsgemäße Schließsystem steigert daher die Diebstahlsicherheit weiter.

Ein weiterer Vorteil ist darin zu sehen, daß eine Begrenzung der Reichweite des Wirkbereichs für das Schließsystem außerhalb des Kraftfahrzeugs gegeben ist. Bei der Keyless Entry/Go-Funktionalität ist aus Sicherheitsgründen erforderlich, daß der Wirkbereich auf die unmittelbare Nähe des Kraftfahrzeugs begrenzt ist. Aufgrund von Umgebungsbedingungen, Toleranzen im Schließsystem selbst, ungenauer Einstellungen des Schließsystems o. dgl. können jedoch Überreichweiten auftreten. Solche Überreichweiten lassen sich mit Hilfe des erfindungsgemäßen Schließsystems ohne weiteren Aufwand wirksam auf zulässige Werte begrenzen.

Zudem ist vorteilhaft, daß Toleranzen der im Schlüssel sowie in der Steuereinrichtung vorhandenen Bauteile sich nicht auf die Messung der Laufzeit des Signals auswirken. Die Verwendung besonders ausgesuchter Bauteile ist somit nicht nötig, was zu einer Verbilligung des Schließsystems führt. Schließlich können sich auch verändernde Umwelteinflüsse, Temperatureinflüsse usw. nicht verfälschend auf die Messung der Laufzeit des Signals auswirken.

Ein Ausführungsbeispiel der Erfindung mit verschiedenen Weiterbildungen ist in den Zeichnungen dargestellt und wird im folgenden näher beschrieben. Es zeigen
- Fig. 1: ein mit einem Schließsystem ausgestattetes Kraftfahrzeug,
- Fig. 2: ein Blockschaltbild für die Steuereinrichtung im Kraftfahrzeug und
- Fig. 3: ein Blockschaltbild für den Schlüssel.

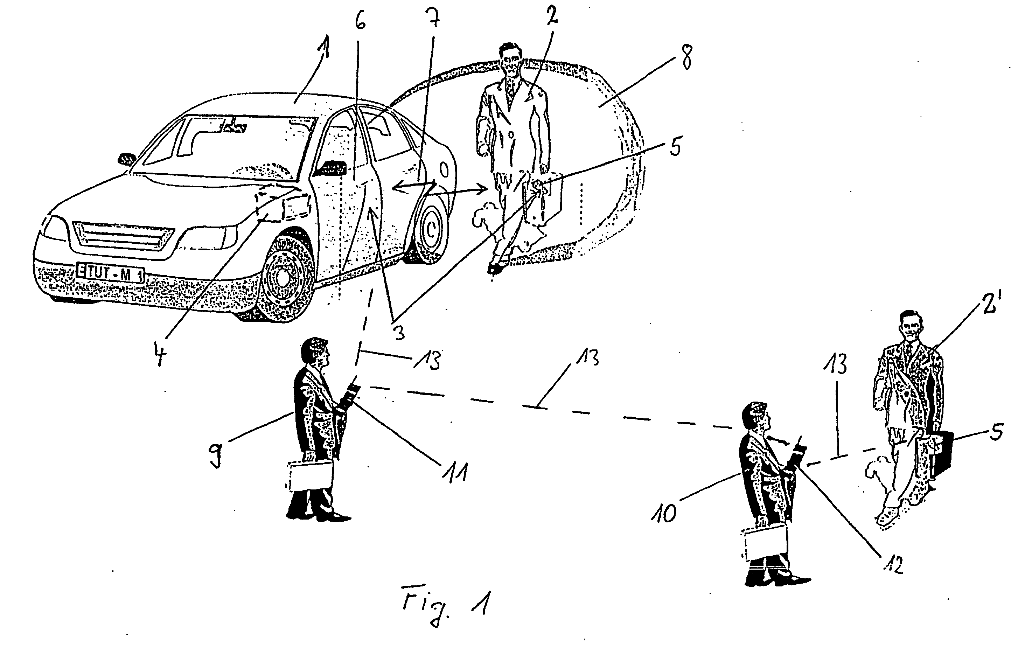

In Fig. 1 ist ein Kraftfahrzeug 1 mit dem berechtigten Benutzer 2 zu sehen. Das Kraftfahrzeug 1 ist mit einem Schließsystem 3 als Türschließsystem versehen, das eine als eine Steuereinrichtung 4 ausgebildete erste Einrichtung und eine als einen zugehörigen elektronischen Schlüssel 5 ausgebildete zweite Einrichtung umfaßt. Der elektronische Schlüssel 5 befindet sich im Besitz des berechtigten Benutzers 2, womit dieser innerhalb eines Wirkbereichs 8 Zugang zum Kraftfahrzeug 1 besitzt.

Die Steuereinrichtung 4 besitzt wenigstens zwei Zustände, wobei im ersten Zustand eine Verriegelung und im zweiten Zustand eine Entriegelung der Autotüren 6 vorliegt. Die Steuereinrichtung 4 und der Schlüssel 5 besitzen zu deren bestimmungsgemäßen Betrieb Mittel zum Senden und/oder Empfangen von Signalen. Bei wenigstens einem dieser zwischen dem Schlüssel 5 und der Steuereinrichtung 4 übertragenen Signale handelt es sich um ein codiertes Betriebssignal 7. Bei berechtigtem Schlüssel 5 ist nach positiver Auswertung des übertragenen Betriebssignals 7 eine Änderung des Zustandes der Steuereinrichtung 4 bewirkbar. Die Übertragung des codierten Betriebssignals 7 kann dabei selbsttätig ohne Mitwirkung des Benutzers 2 erfolgen, sobald dieser den Wirkbereich 8 betritt. Dadurch wird die Entriegelung der Autotüren 6 entsprechend der Keyless Entry-Funktionalität ausgelöst. Verläßt der Benutzer den Wirkbereich 8, so erfolgt eine selbsttätige Verriegelung der Autotüren 6.

In Fig. 1 ist weiter eine Situation gezeigt, in der sich zwei nichtberechtigte Personen 9, 10 Zugang zum Kraftfahrzeug 1 verschaffen wollen, nachdem der berechtigte Benutzer 2' den Wirkbereich 8 verlassen hat. Dazu befindet sich die erste Person 9 mit einem präparierten elektronischen Schlüssel 11 in der Nähe des Kraftfahrzeugs 1, während sich die zweite Person 10 mit einer präparierten Steuereinrichtung 12 in der Nähe des berechtigten Benutzers 2' aufhält, wobei der präparierte Schlüssel 11 und die präparierte Steuereinrichtung 12 selbstverständlich das codierte Betriebssignal 7 nicht kennen. Mittels der präparierten Steuereinrichtung 12 wird der vom berechtigten Benutzer 2' getragene Schlüssel 5 aktiviert, so daß eine Übertragung von Betriebssignalen 13 zwischen der präparierten Steuereinrichtung 12 und dem Schlüssel 5 stattfindet. Die Betriebssignale 13 werden nun, gegebenenfalls entsprechend verstärkt, zwischen der präparierten Steuereinrichtung 12 und der Steuereinrichtung 4 im Kraftfahrzeug 1 über den präparierten Schlüssel 11 weitergeleitet, so daß die Zustandsänderung der Steuereinrichtung 4 erfolgt, ohne daß dies vom Benutzer 2' wahrgenommen würde.

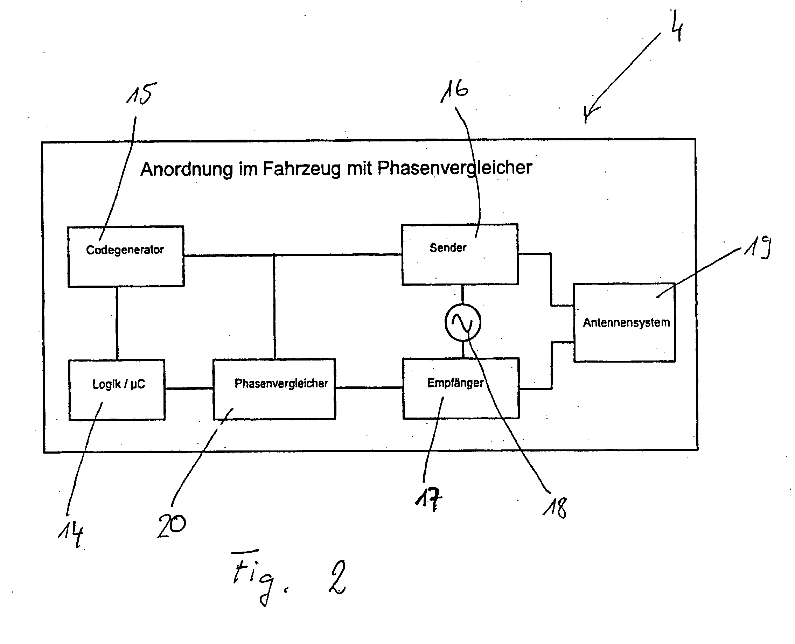

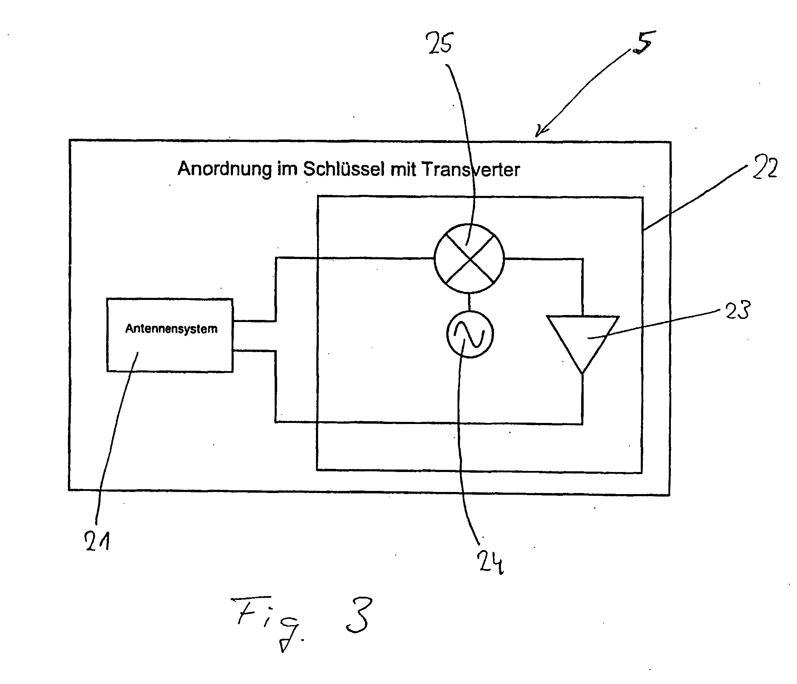

Um einen solchen Zugang von nichtberechtigten Benutzern 9, 10 zum Kraftfahrzeug 1 zu verhindern, wird anhand der Laufzeit des Signals festgestellt, ob das Signal aus dem Wirkbereich 8 oder außerhalb des Wirkbereichs 8 herrührt. Zur Bestimmung der Laufzeit für ein zwischen dem Schlüssel 5 und der Steuereinrichtung 4 übertragenes Signal enthält das Schließsystem 4 Mittel zur Bestimmung des Abstandes zwischen dem Schlüssel 5 und der Steuereinrichtung 4. Diese Mittel zur Abstandsbestimmung gehen näher aus Fig. 2 und 3 hervor.

Wie man anhand von Fig. 2 erkennt, weist die Steuereinrichtung 4 als Mittel zum Senden einen mit einem Oszillator 18 verbundenen Sender 16 zur Aussendung eines Signals über ein Antennensystem 19 auf. Weiter enthält die Steuereinrichtung 4 einen Mikroprozessor 14 bzw. eine Logikschaltung und einen Codegenerator 15, so daß das vom Sender 16 gesendete Signal gegebenenfalls codiert sein kann. Ein vom Schlüssel 5 über das Antennensystem 19 empfangenes Signal wird einem Empfänger 17 zugeführt, wobei das Antennensystem 19 und der Empfänger 17 das Mittel zum Empfangen bilden, und im Mikroprozessor 14 ausgewertet. Wie man weiter in Fig. 3 sieht, besitzt der Schlüssel 5 ebenfalls ein von einem Oszillator 24 sowie einem Antennensystem 21 gebildetes Mittel zum Senden. Außerdem bildet das Antennensystem 19 auch einen Teil des Mittels zum Empfangen im Schlüssel 5, wobei jedoch die weiteren Bestandteile, wie Empfänger, Mikroprozessor o. dgl., hier nicht weiter gezeigt sind. Unter Verwendung der Mittel zum Senden und Empfangen in der Steuereinrichtung 4 sowie im Schlüssel 5 werden in bekannter Weise Signale, bei denen es sich um das codierte Betriebssignal 7 handeln kann, mittels elektromagnetischer Wellen übertragen.

Die Mittel zum Senden und Empfangen in der Steuereinrichtung 4 sowie im Schlüssel 5 werden zusätzlich für die Reichweitenmessung, d.h. für die Bestimmung des Abstandes zwischen der Steuereinrichtung 4 und dem Schlüssel 5, verwendet, indem diese zum Senden sowie Empfangen eines Reichweitensignals geeignet sind. Weiter umfaßt das Mittel zur Abstandsbestimmung eine in Fig. 2 gezeigte Vergleichseinrichtung für das gesendete und das empfangene Reichweitensignal, die in eine der beiden Einrichtungen, und zwar vorliegend in der Steuereinrichtung 4 befindlich ist.

Die Vergleichseinrichtung in der Steuereinrichtung 4 ist bevorzugterweise als ein Phasenvergleicher 20 ausgebildet. Im Phasenvergleicher 20 erfolgt eine Bestimmung der Phasenlage für das gesendete und empfangene Reichweitensignal, wobei ein Phasenversatz im Phasenvergleicher 20 resultiert. Aus dem Phasenversatz kann wiederum der Mikroprozessor 14 die doppelte Laufzeit zwischen der Steuereinrichtung 4 und dem Schlüssel 5 für das Reichweitensignal ermitteln. Im übrigen wird zu näheren Einzelheiten hierzu auch noch auf die nicht vorveröffentlichte deutsche Offenlegungsschrift DE 199 41 428 A1 des Anmelders verwiesen.

Allerdings können Toleranzen in den elektronischen sowie elektrischen Bauteilen der Steuereinrichtung 4 und des Schlüssels 5 zu einer Verfälschung der Laufzeitmessung führen. Um solche Verfälschungen zu vermeiden, umfaßt das Mittel zur Abstandsbestimmung noch eine in Fig. 3 gezeigte Rücksendeeinrichtung 22, die sich in der anderen der beiden Einrichtungen, und zwar vorliegend im Schlüssel 5, befindet. Die Rücksendeeinrichtung 22 leitet das über das Antennensystem 21 empfangene Reichweitensignal unmittelbar auf das Antennensystem 21 zurück. Gegebenenfalls kann noch eine Umsetzung des Reichweitensignals im Schlüssel 5 über einen Verstärker 23 erfolgen. Falls gewünscht, kann das Signal bzw. dessen Code in der Rücksendeeinrichtung 22 noch mittels des Oszillators 24 sowie eines Mischers 25 verändert werden. Wesentlich ist jedoch, daß keine weitere Auswertung des Signals in der Logik des Schlüssels 5 erfolgt und die Rücksendeeinrichtung 22 mitsamt dem Antennensystem 21 in der Art eines Transverters arbeitet, indem der Transverter wie ein Spiegel für das von der Steuereinrichtung 4 gesendete Reichweitensignal wirkt.

Die Arbeitsweise der Steuereinrichtung 4 und des Schlüssels 5 zur Bestimmung des Abstands ist gemäß den Fig. 2 und 3 nun wie folgt. Von der einen Einrichtung, nämlich von der Steuereinrichtung 4 wird ein Signal in der Art einer einstellbaren Codefolge als Reichweitensignal über das Antennensystem 19 gesendet. Die Codefolge enthält wenigstens einen Sendepuls, kann jedoch auch aus einer ganzen Sequenz von Sendepulsen bestehen. Das von der Steuereinrichtung 4 gesendete Reichweitensignal wird anschließend von der anderen Einrichtung, und zwar vorliegend mittels des Antennensystems 21 des Schlüssels 5 empfangen. Das empfangene Reichweitensignal wird der Rücksendeeinrichtung 22 zugeführt, unmittelbar in der Rücksendeeinrichtung 22 umgesetzt und quasi zeitgleich zum Antennensystem 21 zurückgeführt. Vom Antennensystem 21 im Schlüssel 5 wird das Reichweitensignal damit im wesentlichen zeitgleich zu der einen Einrichtung, und zwar zur Steuereinrichtung 4 zurückgesendet. In der einen Einrichtung, und zwar in der Steuereinrichtung 4, erfolgt dann der Vergleich zwischen dem gesendeten und dem empfangenen Reichweitensignal, indem der Phasenversatz des gesendeten und zurückgesendeten Reichweitensignals zur Laufzeitbestimmung im Phasenvergleicher 20 ausgewertet wird. Ist der ermittelte Abstand zulässig, womit der Schlüssel 5 innerhalb des in Fig. 1 gezeigten Wirkbereichs 8 befindlich ist, so ist dann nach positiver Auswertung des übertragenen Betriebssignals 7 eine Zustandsänderung der Steuereinrichtung 4 durchführbar. Ist der ermittelte Abstand hingegen unzulässig, womit der Schlüssel 5 sich nicht im Wirkbereich 8 befindet, so erfolgt selbst bei berechtigtem Schlüssel 5 keine Zustandsänderung der Steuereinrichtung 4.

Da das Reichweitensignal im Schlüssel 5 nicht weiter verarbeitet sondern über die Rücksendeeinrichtung 22 unmittelbar zurückgesendet wird, können sich offensichtlich Toleranzen in den Bauteilen des Schlüssels 5 auf die Reichweitenbestimmung nicht oder allenfalls unwesentlich auswirken. Andere Signale, wie das Betriebssignal 7, werden im Schlüssel 5 bestimmungsgemäß weiterverarbeitet und im allgemeinen nicht unmittelbar zurückgesandt. Es kann auch umgekehrt das Reichweitensignal von der zweiten Einrichtung, nämlich vom Schlüssel 5, ausgesendet werden, wobei dann eine Rücksendeeinrichtung 22 in der Art eines Transverters in der Steuereinrichtung 4 zum unmittelbaren Rücksenden des Reichweitensignals befindlich ist, so daß die Reichweitenbestimmung im Schlüssel 5 erfolgt. Schließlich kann die Reichweitenbestimmung sowohl in der Steuereinrichtung 4 als auch im Schlüssel 5 vorgenommen werden.

In weiterer Ausgestaltung der Erfindung können mehrere Reichweitensignale einander mit oder auch ohne Abstand folgend von der Steuereinrichtung 4 ausgesendet werden. Zweckmäßigerweise bietet sich dabei eine hintereinander folgende Aneinanderreihung einer bestimmten Pulsfolge an. Anschließend kann dann der Mittelwert aus diesen Einzelmessungen gebildet werden. Dadurch werden mehrere Einzelmessungen der Reichweite durchgeführt. Da jede Einzelmessung mit einem Meßfehler behaftet ist, läßt sich bei mehreren Einzelmessungen eine statistische Minimierung der Entfernungs-Meßfehler erzielen. Um die Manipulationssicherheit für die Abstandsbestimmung weiter zu erhöhen, können bestimmte Einzelmessungen aus der Reihe von mehreren Einzelmessungen zur Bildung des Mittelwertes nicht herangezogen werden.

In das gesamte Datenprotokoll, das zwischen der Steuereinrichtung 4 und dem Schlüssel 5 als Signal, beispielsweise als Betriebssignal 7, übertragen wird, können Reichweitensignale in einer definierten Anzahl für Einzelmessungen der Reichweite eingestreut sein. Es bietet sich dabei an, eine beliebige Veränderung der Lage dieser Reichweitensignale im Datenprotokoll vorzunehmen, wodurch die Sicherheit vor unberechtigter Manipulation des Schließsystems 3 ebenfalls weiter gesteigert ist. Als Kennzeichnung für ein Reichweitensignal, das erfindungsgemäß im Schlüssel 5 nicht weiterverarbeitet sondern direkt gespiegelt an die Steuereinrichtung 4 zurückgesendet wird, kann die das Reichweitensignal aussendende Steuereinrichtung 4 in einen dafür vorgesehenen Betriebsmodus umgeschaltet werden. Das Umschalten wird dem Schlüssel 5 innerhalb des Datenprotokolls für das übertragene Signal mitgeteilt. Empfängt der Schlüssel 5 nun ein entsprechendes Datenprotokoll, so wird das unmittelbare Rücksenden des Reichweitensignals im Schlüssel 5 ausgelöst.

Werden mehrere Reichweitensignale gesendet, so können zufällige Verschiebungen um eine gesamte Pulslänge oder auch um mehrere ganzzahlige Vielfache einer Pulslänge bei aufeinanderfolgenden Messungen auftreten. Dies würde unter Umständen zu Meßfehlern bei der Bestimmung der Reichweite führen. Derartige Verschiebungen können verhindert werden, wenn eine variation der Pulsfolge bei aufeinanderfolgenden Reichweitensignalen vorgenommen wird, so daß derartige Mehrdeutigkeiten bei der Reichweitenbestimmungen auszuschließen sind.

Schließlich lassen sich in einer weiteren Ausgestaltung auch noch eventuell verbleibende Systemtoleranzen der beiden Einrichtungen 4, 5 berücksichtigen. Derartige Systemtoleranzen können aufgrund unterschiedlicher Verzögerungszeiten in den elektrischen und/oder elektronischen Bauteilen o. dgl. in der Steuereinrichtung 4 und im Schlüssel 5, insbesondere in der Rücksendeeinrichtung 22, auftreten. Hierzu werden die Systemtoleranzen in einem der eigentlichen Abstandsmessung vorangehenden Kalibrierungslauf ermittelt. Bei der nachfolgenden Abstandsmessung werden die Kalibrierungswerte entsprechend berücksichtigt. Die Berücksichtigung kann beispielsweise in der Vergleichseinrichtung oder auch im Mikroprozessor 14 erfolgen.

Die Abstandsbestimmung mittels des Reichweitensignals zwischen den beiden Einrichtungen 4 und 5 schützt das Schließsystem 3 nicht nur vor Manipulationen durch nichtberechtigte Personen 9, 10, sondern hat auch noch einen weiteren Nutzen. Dieser besteht darin, daß eine gegebenenfalls auftretende Überreichweite des Schließsystems 3 im Außenbereich des Kraftfahrzeugs 1 automatisch begrenzt wird. Dadurch sind ansonsten möglicherweise auftretende Fehlfunktionen des Schließsystems 3 mit Sicherheit verhindert. Zudem ist die Erfindung nicht auf das beschriebene und dargestellte Ausführungsbeispiel beschränkt. Sie umfaßt vielmehr auch alle fachmännischen Weiterbildungen im Rahmen des Erfindungsgedankens. So kann ein derartiges Schließsystem außer zur Betätigung des Türschließsystems auch zur Ver- und/oder Entriegelung des Zündschlosses, der Lenkradverriegelung o. dgl. im Kraftfahrzeug eingesetzt werden. Im übrigen ist auch eine Verwendung für ein sonstiges Türschloß, das sich beispielsweise an einer Immobilie befindet, möglich.

### Bezugszeichen-Liste:

- 1:: Kraftfahrzeug
- 2,2':: (berechtigter) Benutzer
- 3:: Schließsystem
- 4:: Steuereinrichtung / erste Einrichtung
- 5:: elektronischer Schlüssel / zweite Einrichtung
- 6:: Autotüre
- 7:: Betriebssignal
- 8:: Wirkbereich
- 9,10:: nichtberechtigter Benutzer
- 11:: präparierter Schlüssel
- 12:: präparierte Steuereinrichtung
- 13:: Betriebssignal (Übertragung bei Nichtberechtigung)
- 14:: Mikroprozessor
- 15:: Codegenerator
- 16:: Sender
- 17:: Empfänger
- 18:: Oszillator (in steuereinrichtung)
- 19:: Antennensystem (in Steuereinrichtung)
- 20:: Phasenvergleicher
- 21:: Antennensysten (im Schlüssel)
- 22:: Rücksendeeinrichtung
- 23:: Verstärker
- 24:: Oszillator (im schlüssel)
- 25:: Mischer

## Patentansprüche

1. Schließsystem, insbesondere für ein Kraftfahrzeug (1), mit einer wenigstens zwei Zustände besitzenden, als Steuereinrichtung (4) ausgebildeten ersten Einrichtung, wie einer Steuereinrichtung (4) zur Ent- und/oder Verriegelung der Autotüren (6), des Zündschlosses oder der Lenkradverriegelung, und mit einer zugehörigen, als elektronischen Schlüssel (5) ausgebildeten zweiten Einrichtung, wobei die Steuereinrichtung (4) und der Schlüssel (5) zu deren bestimmungsgemäßen Betrieb Mittel zum Senden und/oder Empfangen von Signalen besitzen, und wobei es sich insbesondere bei wenigstens einem der zwischen dem Schlüssel (5) und der Steuereinrichtung (4) übertragenen Signale um ein codiertes Betriebssignal (7) handelt, sowie mit einem Mittel zur Bestimmung des Abstandes zwischen dem Schlüssel (5) und der Steuereinrichtung (4), wobei von einer der beiden Einrichtungen (4, 5) ein Signal, das insbesondere wenigstens einen Sendepuls enthält, als Reichweitensignal gesendet wird, wobei in der anderen Einrichtung (5, 4) eine Rücksendeeinrichtung (22) für das Reichweitensignal befindlich ist, und wobei in wenigstens einer der beiden Einrichtungen (4, 5) sich eine Vergleichseinrichtung für das gesendete und das empfangene Reichweitensignal befindet, so daß nach positiver Auswertung des übertragenen Betriebssignals (7) bei berechtigtem Schlüssel (5) und zulässigem Abstand eine Änderung des Zustandes der Steuereinrichtung (4) bewirkbar ist, wobei die Rücksendeeinrichtung (22) in der Art eines Transverters ausgebildet ist, **dadurch gekennzeichnet, daß** der Transverter als Spiegel für das in der Art einer einstellbaren Codefolge ausgestaltete Reichweitensignal wirkt, derart daß das von der einen Einrichtung (4, 5) gesendete Reichweitensignal unmittelbar in der Rücksendeeinrichtung (22) der anderen Einrichtung (5, 4) umgesetzt und im wesentlichen zeitgleich zu der einen Einrichtung (4, 5) zurückgesendet wird und
daß es sich bei der Vergleichseinrichtung um einen Phasenvergleicher (20) zur Bestimmung der Phasenlage für das gesendete und empfangene Reichweitensignal handelt.

2. Schließsystem nach Anspruch 1, **dadurch gekennzeichnet, daß** ein Prozessor (14), eine Logikschaltung o. dgl. in wenigstens einer der beiden Einrichtungen (4, 5) aus dem Phasenversatz, der als Ergebnis im Phasenvergleicher (20) resultiert, die Reichweite als Abstand zwischen dem Schlüssel (5) und der Steuereinrichtung (4) ermittelt.

3. Schließsystem nach Anspruch 1 oder 2, **dadurch gekennzeichnet, daß** mehrere Reichweitensignale einander folgend, insbesondere hintereinander durch Aneinanderreihung einer bestimmten Pulsfolge, ausgesendet werden, um mehrere Einzelmessungen der Reichweite durchzuführen, wobei vorzugsweise anschließend der Mittelwert der Einzelmessungen zur Minimierung der Entfernungs-Meßfehler gebildet wird.

4. Schließsystem nach einem der Ansprüche 1 bis 3, **dadurch gekennzeichnet, daß** bestimmte Einzelmessungen aus den mehreren Einzelmessungen der Reichweite zur Bildung des Mittelwertes nicht herangezogen werden, derart daß die Manipulationssicherheit für die Bestimmung des Abstandes erhöht ist.

5. Schließsystem nach einem der Ansprüche 1 bis 4, **dadurch gekennzeichnet, daß** in das gesamte Datenprotokoll, das zwischen den beiden Einrichtungen (4, 5) als Signal übertragen wird, Reichweitensignale in einer definierten Anzahl für Einzelmessungen der Reichweite eingestreut sind, wobei insbesondere eine beliebige Veränderung der Lage dieser Reichweitensignale im Datenprotokoll vorgenommen ist.

6. Schließsystem nach einem der Ansprüche 1 bis 5, **dadurch gekennzeichnet, daß** die das Reichweitensignal aussendende Einrichtung (4, 5) in einen dafür vorgesehenen Betriebsmodus umschaltet, wobei das Umschalten der anderen Einrichtung (5, 4) innerhalb des Datenprotokolls für das übertragene Signal mitgeteilt wird.

7. Schließsystem nach einem der Ansprüche 1 bis 6, **dadurch gekennzeichnet, daß** bei mehreren gesendeten Reichweitensignalen eine variation der Pulsfolge zur Ausschließung von Mehrdeutigkeiten erfolgt.

8. Schließsystem nach einem der Ansprüche 1 bis 7, **dadurch gekennzeichnet, daß** Systemtoleranzen der beiden Einrichtungen (4, 5), wie Verzögerungszeiten in deren elektrischen und/oder elektronischen Bauteilen o. dgl., in einer vorhergehenden Kalibrierung ermittelt werden, und daß die Systemtoleranzen bei der Messung der Reichweite, insbesondere in der Vergleichseinrichtung, entsprechend berücksichtigt werden.

## Claims

1. A locking system, especially for a motor vehicle (1), having a first device possessing at least two states and constructed as a control device (4), such as a control device (4) for unlocking and/or locking the car doors (6), the ignition lock or the steering wheel lock, and having an associated second device, constructed as an electronic key (5),
wherein the control device (4) and the key (5) have means for sending and/or receiving signals for their correct operation,
and wherein in particular one of the signals transmitted between the key (5) and the control device (4) is a coded operating signal (7),
and also having a means for determining the distance between the key (5) and the control device (4),
wherein a signal, containing in particular at least one transmitting pulse, is transmitted as a range signal by one of the two devices (4, 5),
wherein a retransmission device (22) for the range signal is situated in the other device (5, 4),
and wherein a comparison device for the transmitted and the received range signal is situated in at least one of the two devices (4, 5) so that after positive evaluation of the transmitted operating signal (7) with an authorised key (5) and permissible distance, a change in the state of the control device (4) can be effected,
wherein the retransmission device (22) is constructed in the manner of a transverter,
**characterised in that** the transverter acts as a reflector for the range signal configured in the manner of an adjustable code signal in such a manner that the range signal transmitted by the one device (4, 5) is directly converted in the retransmission device (22) of the other device (5, 4) and is transmitted back substantially simultaneously to the one device (4, 5) and **in that** the comparison device is a phase comparator (20) for determining the phase position for the transmitted and received range signal.

2. A locking system according to Claim 1,
**characterised in that** a processor (14) a logic circuit or the like in at least one of the two devices (4, 5) determines from the phase shift, which is produced as the result in the phase comparator (20), the range as the distance between the key (5) and the control device (4).

3. A locking system according to Claim 1 or 2,
**characterised in that** several range signals are transmitted following one another, in particular one behind the other by chaining a determined pulse sequence, so as to perform several individual measurements of the range, the average value of the individual measurements then preferably being formed to minimise the measuring errors for the distance.

4. A locking system according to one of Claims 1 to 3,
**characterised in that** specific individual measurements are not taken from the several individual measurements of the range to form the average value so that the manipulation safety for determining the distance is increased.

5. A locking system according to one of Claims 1 to 4,
**characterised in that** range signals in a defined number for individual measurements of the range are spread into the entire data protocol transmitted as a signal between the two devices (4, 5), in particular any change in the position of these range signals being performed in the data protocol.

6. A locking system according to one of Claims 1 to 5,
**characterised in that** the device (4, 5) emitting the range signal switches over into an operating mode provided for it, the switching over of the other device (5, 4) being communicated within the data protocol for the transmitted signal.

7. A locking system according to one of Claims 1 to 6,
**characterised in that** in the case of several transmitted range signals a variation in the pulse sequence takes place to prevent ambiguities.

8. A locking system according to one of Claims 1 to 7,
**characterised in that** system tolerances of the two devices (4, 5), such as delay times in their electrical and/or electronic components or the like, are determined in a preceding calibration,
and **in that** the system tolerances are accordingly taken into consideration during the measurement of the range, in particular in the comparator.

## Revendications

1. Système de fermeture, en particulier pour un véhicule automobile (1), comportant un premier dispositif réalisé comme dispositif de commande (4), possédant au moins deux états, comme un dispositif de commande (4) pour le déverrouillage et/ou le verrouillage des portes d'une automobile (6), de la serrure de contact ou du verrouillage du volant, et un second dispositif correspondant, réalisé comme clef électronique (5), le dispositif de commande (4) et la clef (5), pour leur fonctionnement déterminé, possédant des moyens pour émettre et/ou recevoir des signaux, et, en particulier pour au moins un des signaux transmis entre la clef (5) et le dispositif de commande (4), il s'agit d'un signal de commande codé (7), ainsi qu'un moyen pour déterminer la distance entre la clef (5) et le dispositif de commande (4), un signal, qui comporte en particulier au moins une impulsion d'émission, étant envoyé par un des deux dispositifs (4, 5) comme signal de portée, un dispositif de réémission (22) pour le signal de portée se trouvant dans l'autre dispositif (5, 4), et, au moins dans un des deux dispositifs (4, 5), se trouvant un dispositif de comparaison pour le signal de portée émis et le signal de portée reçu, de sorte que, après évaluation positive du signal de commande (7) transmis, pour une clef (5) autorisée et une distance permise, une modification de l'état du dispositif de commande (4) peut être mise en oeuvre, le dispositif de réémission (22) étant réalisé à la manière d'un transducteur,
**caractérisé en ce que** le transducteur agit comme miroir pour le signal de portée réalisé à la manière d'une succession codée réglable, de sorte que le signal de portée émis par un dispositif (4, 5) est transformé directement dans le dispositif de réémission (22) de l'autre dispositif (5, 4) et est ré-émis généralement de façon isochrone vers un dispositif (4, 5), et **en ce que**, concernant le dispositif de comparaison, il s'agit d'un comparateur de phase (20) pour déterminer la position de phase pour le signal de portée émis et reçu.

2. Système de fermeture selon la revendication 1,
**caractérisé en ce qu'**un processeur (14), un circuit logique ou analogue détermine, dans au moins des deux dispositifs (4, 5), à partir du décalage de phase, qui est obtenu comme résultat dans le comparateur de phase (20), la portée comme distance entre le clef (5) et le dispositif de commande (4).

3. Système de fermeture selon la revendication 1 ou 2,
**caractérisé en ce que** plusieurs signaux de portée sont émis de façon successive, en particulier l'un derrière l'autre par mise à la file d'une succession d'impulsions déterminée, pour effectuer plusieurs mesures individuelles de la portée, avantageusement ensuite la valeur moyenne des mesures individuelles étant formée pour diminuer les erreurs de mesure d'éloignement.

4. Système de fermeture selon une des revendications 1 à 3,
**caractérisé en ce que** des mesures individuelles déterminées ne proviennent pas des plusieurs mesures individuelles de la portée pour former la valeur moyenne, de sorte que la sécurité de manipulation pour la détermination de la distance est augmentée.

5. Système de fermeture selon une des revendications 1 à 4,
**caractérisé en ce que**, dans le protocole de données global, qui est transmis comme signal entre les deux dispositifs (4, 5), des signaux de portée sont distribués en un nombre défini pour des mesures individuelles de la portée, en particulier une modification quelconque de la condition de ces signaux de portée étant effectuée dans le protocole de données.

6. Système de fermeture selon une des revendications 1 à 5,
**caractérisé en ce que** le dispositif (4, 5) émettant le signal de portée commute dans un mode de fonctionnement prévu pour cela, la commutation de l'autre dispositif (5, 4) étant communiquée à l'intérieur du protocole de données pour le signal transmis.

7. Système de fermeture selon une des revendications 1 à 6,
**caractérisé en ce que**, pour plusieurs signaux de portée émis, il est effectué une variation de la succession d'impulsions pour exclure des ambiguïtés.

8. Système de fermeture selon une des revendications 1 à 7,
**caractérisé en ce que** des tolérances de système des deux dispositifs (4, 5), comme des temps de retard dans leurs pièces électriques et/ou électroniques ou analogues, sont déterminées dans un calibrage précédent, et **en ce que** les tolérances de système sont prises en compte de façon correspondante lors de la mesure de la portée, en particulier dans le dispositif de comparaison.
